# EUROPÄISCHE PATENTSCHRIFT

(11) **EP 2 436 946 B1**
(45) Veröffentlichungstag und Bekanntmachung des Hinweises auf die Patenterteilung: **21.08.2013**
(21) Anmeldenummer: 10011611.0
(22) Anmeldetag: 29.09.2010
(51) Int. Cl.: F16F 1/36, H05B 3/20, F16F 1/379, F16F 13/26, H05B 3/34

(54) **Heizelement für schwingungstechnische Bauteile**
Heating element for oscillation-based components
Elément de chauffage pour composants à oscillation

(43) Veröffentlichungstag der Anmeldung: 04.04.2012
(73) Patentinhaber: Carl Freudenberg KG, 69469 Weinheim (DE)
(72) Erfinder: Erl, Andreas, 16761 Henningsdorf (DE); Kapp, Andreas, Dr., 64625 Bensheim (DE)

(56) Entgegenhaltungen:
- DE-U- 1 836 825
- DE-U1-202008 015 485
- JP-A- 63 072 929
- JP-A- 63 111 338
- JP-U- H0 352 445
- US-A- 4 985 884
- US-A- 5 730 429

## Beschreibung

### Technisches Gebiet

Die vorliegende Erfindung betrifft Lager zur Dämpfung bzw. Isolierung von Schwingungen, die mindestens eine elastomere Komponente und/oder mindestens eine Dämpfungsflüssigkeit aufweisen, wobei die Lager flächig mit Flächenheizelementen verbunden sind.

### Stand der Technik

In zahlreichen technischen Vorrichtungen, die Bewegungen ausführen, ist es erforderlich, Schwingungen effizient zu dämpfen oder zu isolieren. Störende Schwingungen können dabei beispielsweise durch Antriebe, insbesondere Motoren, verursacht werden Sie können auch durch äußere Einflüsse verursacht werden, beispielsweise durch Windlasten bei Stahlkonstruktionen oder sich ändernde durchzusetzende Massen oder Volumina bei Anlagen der Gewinnung und Aufbereitung in der Grundstoffindustrie.

Die Dämpfung und Isolierung der Schwingungen ist erforderlich, um den stabilen und gleichmäßigen Betrieb zu gewährleisten. Die Dämpfung und Isolierung dienen auch dem Lärmschutz und dem Schutz von Personen, welche die Vorrichtungen bedienen oder sich in ihrer Umgebung bewegen.

Zur Dämpfung und Isolierung von Schwingungen werden nach dem Stand der Technik vor allem elastomere Lager wie Konuslager und Hydrolager eingesetzt.

Mobile Arbeitsmaschinen und Fortbewegungsmittel haben Antriebe mit leistungsstarken Motoren. Größere Maschinen verfügen in der Regel zudem über Kabinen für Fahrer und Maschinenbediener. Für die Lagerung solcher Kabinen werden häufig Konuslager eingesetzt. Sie ermöglichen eine gute Schwingungsisolationswirkung in axialer Richtung und eine gute Führung der zu lagernden Massen in radialer Richtung. Erreicht wird dies aufgrund des relativ hohen Steifigkeitsverhältnisses von radialer zu axialer Steifigkeit des Konuslagers. Für die Herstellung solcher Elastomer-Verbundlager kommen in der Regel niedrigdämpfende Elastomere zur Anwendung, denn das Hauptziel ist die Isolierung von Schwingungen.

Hydrolager bieten zusätzliche Funktionalität aufgrund ihres Frequenz- bzw. amplitudenabhängigen Verhaltens in Lagerungen, welche einen großen Zielkonflikt aus Tragen, Dämpfen, Isolieren, Stützen, Federn und Nutzungsdauer aufweisen.

Diese sind in der Regel so gestaltet, dass ein Fluid dicht in einem Elastomer Verbundteil eingeschlossen wird. Gleichzeitig werden Teilvolumina des Elastomer-Verbundteils als Fluidkammem so gestaltet, dass sie miteinander verbunden sind. Das Fluid kann diese Verbindung durchströmen. Relativbewegungen zwischen den beiden Anbindungsteilen eines Lagers verursachen Verformungen des Elastomerbauteils, die sich direkt auf das eingeschlossene Fluid übertragen und durch die relative Vergrößerung oder Verkleinerung der Hauptkammem zum Strömen des Fluids führen. Die physikalische Wirkung der in Hydrolagern verwendeten Fluide wird von der Fluidmasse und der Viskosität bestimmt. Ziel ist vor allem ein frequenzabhängiges oder amplitudenabhängiges Verhalten, durch das Frequenzbereiche entstehen, bei denen lagerspezifisch die Dämpfung oder die Isolierung von Schwingungen im Vordergrund stehen können, oder auch eine festere Anbindung eines zu lagernden Motors an den Rahmen eines Fahrzeugs.

Der Schutz eines Maschinenbedieners oder weiterer Personen vor Vibration und Lärm spielt eine immer wichtigere Rolle. Gerade mobile Arbeitsmaschinen können länger ermüdungsfrei betrieben werden, wenn die Belastungen für den Bediener weitgehend reduziert sind. Daher besteht grundsätzlich ein Bedarf nach effizienten Vorrichtungen zur Dämpfung bzw. Isolierung von Schwingungen. Außerdem bewirken nicht verringerte störende Schwingungen im Allgemeinen einen erhöhten Materialverschleiß von Vorrichtungen wie Anlagen und Maschinen.

Bei bekannten elastomeren Lagerelementen der Schwingungstechnik wird eine effiziente Dämpfung bzw. Isolierung der Schwingungen insbesondere durch die sorgfältige Auswahl der Materialien, wie Elastomere und Dämpfungsflüssigkeiten, in Verbindung mit der Abstimmung des Lagers auf die Schwingung erreicht. Dabei besteht das Problem, dass die Matenaieigenschaften sowohl von Elastomeren als auch von Dämpfungsflüssigkeiten temperaturabhängig sind. So werden Elastomere bei niedrigen Temperaturen härter und spröder, während Flüssigkeiten bei niedrigen Temperaturen eine höhere Viskosität aufweisen. Daher wirken Lager zur Dämpfung oder Isolierung von Schwingungen bei besonders niedrigen Temperaturen nicht optimal oder funktionieren im Extremfall nicht mehr. Problematisch ist dabei auch, dass die Veränderung der Materialeigenschaften nicht linear verläuft sondern dass sich bei niedrigen Temperaturen stark progressive Veränderungen der Eigenschaften ergeben können, die mit einer deutlichen Veränderung des Dämpfungsverhaltens einhergehen. Daher sind entsprechend schwingungstechnisch gedämpfte oder isolierte Maschinen und Vorrichtungen oft im Winter oder im kalten Klima nicht ader nur eingeschränkt einsetzbar.

Im Stand der Technik wird das Problem gelöst, indem spezielle Elastomere oder Dämpfungsflüssigkeiten eingesetzt werden, die relativ geringe Abweichungen der Materialeigenschaften über große Temperaturintervalle aufweisen. Bei Dämpfungsflüssigkeiten können auch Zusätze, wie Antifrostschutzmittel, beigemischt werden, Allerdings lässt sich durch diese Maßnahmen das Problem der Veränderung der Eigenschaften nur abschwächen, nicht jedoch vollständig lösen. Sie bewirken auch, dass die Materialien komplexer, aufwändiger in der Herstellung und im Ergebnis teurer sind.

Die Offenlegungsschrift JP H3-52445 U (vgP. Oberbegriff der Ansprüche 1 und 12) betrifft schwingungsdämpfende Vorrichtungen mit einer leitfähigen elastomeren Schicht, die integraler Bestandteil der Vorrichtung ist, und über welche die Temperatur der Vorrichtung eingestellt werden kann.

DE 18 36 825 U betrifft schwingungsdämpfende Vorrichtungen mit heizbaren Gummimetallfedem.

Die DE 20 2008 015 485 U1 betrifft Heizbeschichtungen zum Aufbringen auf einen Untergrund.

Die US 5,730,429 betrifft ein System zur Dämpfung von Schwingungen mit einem frequenzabhängigen Entkoppler.

### Aufgabe der Erfindung

Der Erfindung liegt die Aufgabe zugrunde, die oben beschriebenen Probleme zu überwinden oder zu reduzieren. Es sollen Lager zur Dämpfung bzw Isolierung von Schwingungen bereitgestellt werden, die über große Temperaturintervalle relativ glechmäßige Dämpfungseigenschaften aufweisen. Insbesondere solien die Lager auch bei extrem niedrigen Temperaturen, beispielsweise unterhalb 0°C oder unterhalb -20°C oder sogar -40°C, eine ausreichende Dämpfungswirkung aufweisen.

Dabei sollen soweit wie möglich aufwändige und teure temperaturstabile Elastomere oder Dämpfungsflüssigkeiten nicht eingesetzt werden. Vielmehr sollen die Lager auf einfache Weise gegen extreme Temperaturen stabilisierbar sein. Es soll auch eine Stabilisierung verschiedener Lagertypen ermöglicht werden. Die Lager sollen eine hohe Lebensdauer aufweisen und variabel einsetzbar sein.

### Darstellung der Erfindung

Die vorliegende Erfindung löst die genannte Aufgabe durch Lager, Flächenheizelemente und Verwendungen gemäß den Patentansprüchen.

Gegenstand der Erfindung ist ein Lager zur Dämpfung oder zur Isolierung von Schwingungen, das mindestens eine elastomere Komponente und/oder mindestens eine Dämpfungsflüssigkeit aufweist, wobei das Lager mindestens teilweise mit einem Flächenheizelement verkleidet ist.

Dabei bedeutet "verkleidet", dass das Flächenheizelement zumindest teilweise mit dem Lager flächig verbunden ist. Die Temperatur des Lagers ist durch das Flächenheizelement einstellbar. Insbesondere kann die Temperatur des Lagers durch das Flächenheizelement erhöht werden. So kann bei niedrigen Umgebungstemperaturen gewährleistet werden, dass das Lager und damit die elastomere Komponente und/oder die Dämpfungsflüssigkeit eine Temperatur aufweist, bei der ausreichende oder optimale schwingungstechnische Eigenschaften erreicht werden. Dies betrifft insbesondere die Dämpfung und Isolierung von Schwingungen.

Als Lager bezeichnet man im Allgemeinen ein Element zum Führen gegeneinander beweglicher Bauteile. Schwingungstechnische

Lagerelemente weisen Komponenten oder Bauteile auf, welche die Schwingungen, die von einem Bauteil verursacht werden oder ausgehen, verringern, so dass diese nur vermindert auf ein zweites bewegliches Bauteil übertragen werden. Sie können auch verhindern, dass potentiell auftretende Schwingungen entstehen oder ein hohes Betragsniveau erreichen. Erfindungsgemäß wird unter "Dämpfen" von Schwingungen daher die Verhinderung und Abminderung von kontinuierlichen oder vorübergehend entstehenden Schwingungen verstanden. Solche Lager können auch zur Isolierung von Schwingungen dienen.

Schwingungsdämpfende und -isolierende Komponenten in Lagern sind insbesondere elastomere Komponenten und Dämpfungsflüssigkeiten. Die elastomeren Komponenten bestehen dabei üblicherweise im Wesentlichen aus Polymeren, insbesondere organischen Polymeren. Sie weisen elastische Eigenschaften auf, Dies bedeutet, dass sie sich bei Zug- oder Druckbelastung elastisch verformen, jedoch nach Abklingen der Belastung wieder die ursprüngliche Form annehmen. Erfindungsgemäß kann die Dämpfungsvorrichtung übliche Elastomere aufweisen, insbesondere Kautschuke, die nach Stand der Technik vernetzt sind. Geeignete Materialien sind auch Silikonelastomere, fluorierte Elastomere, Polyisopren, Polybutadien, Nitrilkautschuk, Styrenbutadienkautschuk, deren Mischungen oder Copolymere.

In bevorzugten Ausführungsformen der Erfindung ist die elastomere Komponente ausgewählt aus einer Trennwand und einem Federkörper. Die Trennwand grenzt Volumina innerhalb des Lagers, bzw. des Lagers nach außen ab. Ein Federkörper kann grundsätzlich die gleichen Merkmale bzw. Eigenschaften aufweisen, zusätzlich jedoch im Kraftfluß zwischen Auflager und Traglager des Lagerelements wesentliche Stützwirkung zeigen.

Als Lagerfluide (Dämpfungsflüssigkeiten) werden beispielsweise organische Verbindungen oder Polymere eingesetzt, die im Temperaturbereich der Anwendung des Lagers flüssig sind und eine geeignete Viskosität aufweisen. Übliche Fluide sind Silikonöle, aber auch höherwertige Alkohole oder andere Fluide, bzw. Flüssigkeiten mit Beimengungen in unterschiedlichen Mengen-oder Volumenverhältnissen zur Basisflüssigkeit, Lager mit Dämpfungsflüssigkeiten, wie Hydrolager, weisen oft zusätzliche elastomere Komponenten auf, zum Beispiel eine zwischen Trennplatten, die durchströmbar oder nicht durchströmbar sein können, frei bewegliche Membran. Diese kann auch unter einer radialen oder auch partiell axialen Vorspannung stehen. Diese Membranen, oder synonym Lose, können ebenfalls als Trennwände aufgefasst werden. Der Begriff "Hydrolager" wird im Rahmen dieser Anmeldung synonym verwendet mit dem Begriff "hydraulisch dämpfendes Lager".

In einer bevorzugten Ausführungsform der Erfindung weist das Lager mindestens eine gekrümmte Außenwand auf, die mit einem Flächenheizelement verkleidet ist. Die erfindungsgemäßen Flächenheizelemente sind bevorzugt flexibel, das heißt dehnbar und/oder biegbar, so dass sie auf einfache Weise an gekrümmte Außenwände, Ecken, Kanten oder Rundungen angepasst werden können. Alternativ ist es auch möglich, ein starres, nicht bewegliches Flächenheizelement bereitzustellen. Dies kann beispielsweise vorteilhaft sein, wenn Flächenheizelemente serienmäßig mit Lagern bekannter Geometrie verbunden werden, so dass bei der Fertigung der Flächenheizelemente bereits die Struktur des Lagers berücksichtigt werden kann. Gekrümmte Außenwände sind beispielsweise zylindrische oder konische Außenwände. Das Flächenheizelement kann auch einen Teil der Aufnahme einschließen. Die Aufnahmen können Konsolen, Träger, Lenker, Lagerböcke, oder auch Rahmen sein, die mit Aufnahmebohrungen versehen sind.

In verschiedenen Ausführungsformen der Erfindung ist das Lager beispielsweise ein Gelenkblock, ein Formlager, ein Maschinenlager, ein V-Lager, ein Konuslager, ein Hydrolager, ein Keillager, ein Flachlager, ein Sphaerolager, ein Stoß- oder Schwerlastdämpfer, ein Luftlager oder eine Luftfeder. Solche Lager weisen jeweils mindestens eine elastomere Komponente auf, deren Temperatur erfindungsgemäß stabilisiert werden kann.

In einer bevorzugten Ausführungsform ist das Lager ein Hydrolager. Hydrolager weisen neben elastomeren Komponenten auch mindestens eine Dämpfungsflüssigkeit auf, Als elastomere Komponenten sind im Allgemeinen mindestens eine Trennwand und ein Federköper enthalten. Da also mindestens zwei temperatursensitive Bauteile enthalten sind, ist die erfindungsgemäße Dämpfungsstabilisierung bei einem Hydrolager besonders wirksam und vorteilhaft. So kann erfindungsgemäß die Temperatur auf einen Wert eingestellt werden, bei dem das Elastomer und die Flüssigkeit gute Dämpfungseigenschaften zeigen.

Hydrolager sind im Stand der Technik weithin bekannt. Erfindungsgemäß können beispielsweise flüssigkeitsgefüllte Buchsenlager eingesetzt werden, die in DE 42 42 080 C1 offenbart werden. Die erfindungsgemäße Ausstattung solcher Lager mit einer Flächenheizung kann beispielsweise über einen Teil einer zylindrischen oder konischen Außenwand erfolgen. Sie kann einen Teil der Aufnahme einschließen. Die Aufnahmen können Konsolen, Träger, Lenker, Lagerböcke, oder auch Rahmen sein, die mit Aufnahmebohrungen versehen sind. Solche Buchsenlager weisen einen Federkörper aus elastomerem Werkstoff auf. Zwischen zwei in Bewegungsrichtung hintereinander liegenden flüssigkeitsgefüllten Kammern ist eine bewegliche Trennwand angeordnet, die aus einem elastomeren Werkstoff besteht.

Geeignet sind auch die hydraulisch dämpfenden Hülsengummifedem, die in DE 196 22 248 C2 offenbart werden. Auch diese Lager weisen eine gummielastische Trennwand zwischen zwei Flüssigkeitskammem sowie einen Federkörper aus einem elastomeren Werkstoff auf.

Weitere hydraulisch dämpfende Lager werden in EP 1031759 B1 offenbart. Bei diesen Lagern ist neben zwei Kammern mit Dämpfungsflüssigkeit auch eine Luftkammer vorgesehen, welche auf das Lager eine eigenschaftsmodifizierende Wirkung zeigen kann.

Weitere geeignete hydraulisch dämpfende Lager sind in DE 20 2005 021498 U1 offenbart. Das Lager umfasst ein Auflager und ein Traglager, Federkörper und eine Membran sowie mindestens einen Raum mit einer Dämpfungsflüssigkeit. Wie die weiteren oben beschriebenen Lager ist auch dieses Lager mindestens teilweise zylindrisch, so dass das Heizelement um das Lager gewickelt werden kann. Auf die hier zitierten Patentdokumente und die darin beschriebenen Lager wird hiermit ausdrücklich Bezug genommen.

In der Erfindung ist das Flächenheizelement mit dem Lager lösbar verbunden. Die Verbindung kann formschlüssig und/oder kraftschlüssig sein. Eine lösliche Verbindung kann durch bekannte Verbindungsmittel, wie Klettverschlüsse, Reißverschlüsse, Schnallen, einrastende Elemente, Knöpfe, Druckknöpfe, Ösen, Haken, Nieten, Schrauben, Bänder etc. verwirklicht werden. Gegebenenfalls weist das Flächenheizelement zur löslichen Verbindung geeignete Ausnehmungen (Durchbrechungen) auf, wie Löcher oder Schlitze. Die einrastenden Elemente können beispielsweise pilzförmig sein und in passende Ausnehmungen eingerastet werden.

Die lösbare Verbindung kann allgemein so angeordnet sein, dass das Lager und das Flächenelement jeweils miteinander kompatible Verbindungselemente aufweisen, wie Klettstreifen. In einer bevorzugten Ausführungsform ist das Flächenheizelement mit sich selbst lösbar verbindbar, um dadurch auch eine lösbare Verbindung mit dem Lager zu erzeugen. Beispielsweise kann ein Flächenheizelement mit zwei Klettstreifen auf eine zylindrische Oberfläche eines Lagers gewickelt werden. Die Klettstreifen an den Enden können dann verbunden werden, so dass gleichzeitig eine lösbare Fixierung des Heizelements an das Lager erreicht wird. Die lösbare Verbindung hat allgemein den Vorteil, dass das Flächenheizelement bei Bedarf, beispielsweise bei einem Kälteeinsatz oder generell im Winter, lösbar mit dem Lager verbunden werden kann und auf einfache Weise und schnell wieder entfernt werden kann, wenn die Temperaturstabilisierung nicht mehr erforderlich ist. Auf diese Weise wird das Flächenheizelement vor Abnutzung geschützt. Ein weiterer Vorteil ist, dass das Flächenheizelement bei Abnutzung oder Beschädigung auf einfache Weise ausgetauscht werden kann, ohne dass das Lager verändert werden muss.

In der Erfindung ist das Flächenheizelement eine Bahnenware, die mit einem leitfähigen Material für elektrische Ladungsträger ausgestattet ist, oder es umfasst zumindest eine solche Bahnware. Bahnenwaren sind erfindungsgemäß bevorzugt, da sie einfach hergestellt und an Lager fixiert werden können. Solche Bahnenwaren werden im Stand der Technik insbesondere im Kfz-Bereich für Sitzheizungen eingesetzt. In einer bevorzugten Ausführungsform der Erfindung ist die Bahnenware ein Vliesstoff, ein textiles Material, wie Leinen oder Segeltuch, oder eine Folie. Folien beispielsweise aus Polymeren eignen sich zur Verkleidung von kleinen Lagern, da sie relativ dünn sind. Das leitfähige Material soll bei Durchfluss von Strom elektrische Energie in Wärmeenergie wandeln.

Die so ausgestattete Bahnenware ist bevorzugt gas- und/oder flüssigkeitsdurchlässig. Erreicht werden kann dies auch durch eine zumindest teilweise Durchbrechung der flächigen Ausdehnung. Sie weist bevorzugt eine ausreichende Beständigkeit gegenüber Gasen und Flüssigkeiten, insbesondere unter den Verwendungsbedingungen des Lagers, auf. Die Bahnenware ist bevorzugt innerhalb der Einsatztemperatur dauerhaft wärmebeständig. Sie weist bevorzugt auch bei höheren Temperaturen zumindest vorübergehend eine ausreichende Wärmebeständigkeit auf.

Das leitfähige Material ist üblicherweise in der Form von Leiterbahnen angeordnet. Diese unterscheiden sich bevorzugt durch ihre Zusammensetzung von dem Trägermaterial. Das leitfähige Material ist nach bekannten Methoden in die Bahnenware eingearbeitet oder an ihrer Oberfläche fixiert. Solche Leiterbahnen bestehen bevorzugt aus Metallen oder Kohlenstofffasem.

Die Leiterbahnen können beispielsweise in Form von Drähten oder gedruckten Pasten eingesetzt werden. Sie werden in geeigneten Mustern oder Geometrien auf oder in das Trägermaterial eingearbeitet. Obwohl üblicherweise linienförmige Geometrien eingesetzt werden, können auch flächige Leiterbahnen eingesetzt werden. Allgemein weist das leitfähige Material einen elektrischen Widerstand auf, so dass bei Stromfluss durch die Leiterbahnen ein Teil der elektrischen Energie in Wärme umgewandelt wird. Die Verteilung der Leiterbahnen in oder auf dem Trägermaterial bewirkt eine gleichmäßige Erwärmung.

In einer bevorzugten Ausführungsform weist die Flächenheizung eine Vielzahl von parallelen Leiterbahnen auf. Diese sind bevorzugt mit weiteren Leiterbahnen verbunden. Auf diese Weise können elektrisch parallel geschaltete Ohmsche Widerstände entstehen.

Durch Aufbringung geeigneter Muster von linearen parallelen Leiterbahnen in Verbindung mit Querverbindungen wird insgesamt eine elektrisch leitende Verbindung der verallgemeinerten Ohmschen Widerstände erreicht. Dabei können sich die Muster auch dreidimensional erstrecken, so dass die gleichmäßige Verteilung der Wärme in dem Material verbessert wird.

In einer Ausführungsform der Erfindung weist das Flächenheizelement mehr als eine Schicht auf. Allgemein kann das Flächenheizelement ein Laminat aus mindestens einer Heizschicht und/oder mindestens einer weiteren funktionalen Schicht sein. Um die Heizwirkung zu verstärken, kann es vorteilhaft sein, mehrere Heizelemente übereinander zu positionieren.

Besonders bevorzugt ist der Einsatz eines Vliesstoffs mit eingearbeiteten oder an der Oberfläche enthaltenen Leiterbahnen oder eines Laminats eines solchen Vliesstoffes.

Das Heizelement kann an beiden Oberflächen Schutzschichten aufweisen. In einer bevorzugten Ausführungsform der Erfindung ist das Flächenheizelement mit einer äußeren Schicht versehen, insbesondere einer vor Verschleiß und/oder Feuchtigkeit schützenden Schicht. Die äußere Schicht kann beispielsweise gegen mechanische Belastung, wie Schläge und Stöße, beispielsweise auch durch Steine oder Sand, schützen. Eine Außenschicht kann auch die optischen Eigenschaften wunschgemäß verbessern. Die Außenschicht kann beispielsweise aus Lacken, Elastomeren oder anderen Polymeren bestehen. In einer Ausführungsform wird eine wärmeleitende Schicht eingesetzt. Außerdem ist es bevorzugt, dass das Heizelement eine äußere Wärme-isolierende Schicht aufweist, Eine innere Schutzschicht kann dazu dienen, den direkten Kontakt des Lagers mit den Heizelementen zu unterbinden. Die innere Schutzschicht weist bevorzugt gute wärmeleitende Eigenschaften auf und stellt einen guten Wärmeübergang zum Lager sicher.

Das flächige Heizelement deckt zumindest teilweise die Oberfläche des Lagers ab. Dabei ist es bevorzugt, dass das Heizelement so ausgestaltet ist, dass es an die abzudeckende Oberfläche angepasst ist. Dabei ist das Heizelement als Abwicklung ausgestaltet. Darunter wird erfindungsgemäß ein vorgefertigtes Flächenheizelement verstanden, insbesondere in flächiger Form, bei dem die herzustellende dreidimensionale Form für die Verbindung mit dem Lager bereits vorgegeben ist. Die Abwicklung enthält kennzeichnende Muster und/oder Elemente, wie Falzlinien oder Schnittlinien, an denen das Element zu biegen oder zu durchtrennen ist. Die Linien können markiert sein, um die Anwendung zu erleichtern. Sie können auch modifiziert sein, um entlang der Linien die Biegbarkeit oder Durchtrennbarkeit zu gewährleisten oder zu erleichtern. Zu diesem Zweck kann das Element beispielsweise eine Berandungsgeometrie aufweisen, welche in entsprechender Betrachtungsrichtung Strecken- und oder bogenförmige Abschnitte enthält.

Bevorzugt ist das Flächenheizelement zumindest teilweise oder auch vollständig mit dem Lager formschlüssig verbunden. Zur Stabilisierung der schwingungstechnischen Lagereigenschaften durch Temperaturerhöhung kann es ausreichend sein, wenn ein Teil des Lagers mit dem Flächenheizelement verbunden ist. Dabei sollten insbesondere Oberflächen mit dem Heizelement verbunden werden, die eine gute Wärmleitung zu den übrigen Teilen des Lagers, insbesondere zu dem elastomeren Teil und den Flüssigkeitskammem, bewirken. Dies wird beispielsweise durch metallische Oberflächen gewährleistet. Bei teilweiser Verbindung eines Lagers mit einem Flächenheizelement ist es außerdem bevorzugt, relativ große und gleichmäßige Oberflächen mit dem Heizelement zu versehen. So kann es bei konischen oder zylindrischen Lagern ausreichend sein, die gekrümmten Oberflächen mit dem Heizelement zu versehen, während die Seitenflächen und/oder die Verbindungsstücke mit den zu dämpfenden oder zu isolierenden Bauteilen ganz oder teilweise nicht abgedeckt werden. Oberflächenabschnitte des Lagers, die nicht unmittelbar mit der Flächenheizung versehen sind, können dabei mit Isoliermaterialien versehen werden. Erfindungsgemäß kann das Lager mit einer geeigneten Kombination aus einem Flächenheizelement und isolierenden Abschnitten versehen werden.

Eine teilweise Abdeckung der Oberfläche des Lagers ist auch erforderlich oder bevorzugt, wenn für den Anwender nur ein Teil des Lagers zugänglich ist. Diese Problematik kann sich bei Lagern zeigen, die im Inneren von Maschinen eingearbeitet sind. Gerade bei solchen Lagern ist es erfindungsgemäß vorteilhaft, ein der abzudeckenden Oberfläche angepasstes Flächenheizelement, insbesondere eine Abwicklung, einzusetzen, um die Verbindung zu optimieren.

In besonderen Ausführungsformen der Erfindung ist die Dicke des Flächenheizelements zwischen 1 mm und 10 cm, insbesondere zwischen 1 cm und 5 cm.

Das erfindungsgemäße Flächenheizelement ist an geeignete elektrische Komponenten angeschlossen, bzw. die elektrischen Bauelemente sind Bestandteil des Flächenheizelements. Das Flächenheizelement ist beispielsweise mit einer Spannungsquelle, einem Temperatursensor, einem elektronischen Anschluss, einer Steuereinheit, einer Regelungseinheit, einer Signalübermittelungseinheit und/oder einem Temperatursensor verbunden.

In einer bevorzugten Ausführungsform der Erfindung ist das Flachenheizelement an eine Spannungsquelle angeschlossen. Die Spannungsquelle gewährleistet die Stromversorgung. Sie kann beispielsweise eine Batterie, ein Akkumulator, ein Generator, eine Solarzelle, ein Röhrenkollektor oder ein Anschluss an das elektrische Stromnetz sein. Besonders bevorzugt ist der Einsatz von Energien, wie Solarenergie, Geothermie, Biomasse oder Windenergie, welche durch geeignete Wandlerelemente verfügbar gemacht werden.

In einer bevorzugten Ausführungsform der Erfindung ist das Lager mit dem Flächenheizelement an einen Temperatursensor angeschlossen. Der Temperatursensor ist bevorzugt über ein Sensorkabel mit dem Flächenelement und/oder dem Lager verbunden. Bevorzugt weist der Temperatursensor zusätzlich eine Anzeige auf, die dem Anwender die Einstellung der Temperatur ermöglicht. Es kann auch eine automatische Temperaturkontrolle eingebaut werden.

In einer weiteren bevorzugten Ausführungsform der Erfindung weist das Lager zusätzlich ein Kühlelement auf. Dadurch kann neben der Erhöhung der Temperatur auch eine Verringerung der Temperatur eingestellt werden. Diese Ausführungsform ist beispielsweise bei Lagern vorteilhaft, die über extreme Temperaturbereiche eingesetzt werden. In einer besonderen Ausführungsform weist das Flächenheizelement dabei Röhren auf, die von einem Fluid durchströmt werden. Durch Einstellung der Fluidtemperatur kann die Temperatur des Flächenheizelements und des Lagers eingestellt werden. Diese Ausführungsform hat den Vorteil, dass das Flächenheizelement allgemein als Temperaturregler dient und zum Heizen oder Kühlen eingesetzt werden kann,

In einer weiteren bevorzugten Ausführungsform der Erfindung wird die Temperatur des Flächenheizelements mit einer Steuereinheit und/oder einer Regelungseinheit eingestellt.

Die Stabilisierung der Dämpfung und/oder Isolierung wird unabhängig von der Art und Ausbildung der elastomeren Komponente und der Dämpfungsflüssigkeit erreicht. Sofern schwingungstechnisch messbare Größen des Lagers mit dem Flächenheizelement erfasst werden, kann die Stabilisierung mittelbar in Abhängigkeit von der Art und Ausbildung der elastomeren Komponente und der Dämpfungsflüssigkeit über eine Steuerungs- oder Regelungseinrichtung erreicht werden. Dazu kann in der Steuerungs- oder Regelungseinrichtung ein mathematisch-physikalisches Ersatzmodell hinterlegt sein und eingesetzt werden.

Erfindungsgemäß kann das Flächenheizelement in günstiger Weise an ein Lager angepasst werden. Dazu dienen unter anderem die Auswahl und Ausgestaltung der lösbaren Verbindungsmittel, Ausnehmungen, Verbindungsflächen und die Bereitstellung in Form einer Abwicklung, die auf das Lager abgestimmt ist.

Bei Elastomeren lässt sich das Phänomen beobachten, dass diese bei sehr niedrigen Temperaturen zunehmend steifer werden und Verformungen weniger gut ertragen werden. Auch bei höheren Temperaturen werden abnehmende Nutzungsdauern festgestellt. Auf diese Weise ergibt sich in Abhängigkeit des Elastomers, aber auch des Lagers, der Lagerung und der spezifischen Nutzung ein optimaler Temperaturbereich für das einzusetzende Lager, mit der Folge eines anforderungsgerechten Verhaltens der Lagerung. Durch die erfindungsgemäße Beeinflussung der Lagertemperatur kann eine ausreichende und betriebsbedingt lange Nutzungsdauer erreicht werden.

Ein bevorzugtes Einsatzgebiet von Lagerelementen mit den erfindungsgemäßen Elementen zur Temperatureinstellung sind Anlagen, Vorrichtungen, Maschinen, welche im so genannten Dauerbetrieb laufen. Hier seien beispielhaft Brecher, Mühlen, Siebanlagen, Pumpen und Kompressoren genannt.

Die Temperatur des Lagers kann bei Vorrichtungen und Anlagen, die nicht im Dauerbetrieb laufen, auch direkt bei oder vor der Inbetriebnahme eingestellt werden, um eine optimale Dämpfung oder Isolierung über die gesamte Betriebsdauer zu gewährleisten.

Ungünstige Bedingungen für die Lagerelemente, wie hohe oder niedrige Temperaturen, Medienbeaufschlagung, Staub und Gestein werden in der Rohstoffgewinnung Untertage vorgefunden, aber auch in den Tropen oder in polaren und subpolaren Regionen. Hier kann eine stabile Ausgestaltung der Flächenheizelemente, beispielsweise durch Schutzschichten, ein robustes Trägermaterial, nachgiebigem oder auch festem Grundaufbau den unterschiedlichen Anforderungen Rechnung tragen.

Sofern die Flächenheizelemente stabilisierende Elemente aufweisen, erfüllen diese auch eine Schutzfunktion vor Beaufschlagung der Lager durch Medien, Staub, Gestein, oder schützen vor direkter Sonneneinstrahlung. Ein weiterer Vorteil des erfindungsgemäßen Lagers ist, dass die stabilisierenden Elemente unabhängig von der Temperatureinstellung wirken können.

Die Durchbrüche in den Flächenheizelementen können das Durchleiten von Stoffen, Energie oder Information dienen. Damit kann beispielsweise eine Kühlung oder Erwärmung des Lagers erreicht werden, der Zustand des Lagers mittels Sensoren erfasst, oder es können Stell- bzw. Regelinformationen zwischen Aktoren im Lager und einer außerhalb des Lagers befindlichen Informationen verarbeitenden Einheit ausgetauscht werden.

Gegenstand der Erfindung ist auch die Verwendung eines Flächenheizelements zur Erhöhung der Temperatur eines Lagers zur Dämpfung und/oder Isolierung von Schwingungen, wobei das Lager mindestens eine elastomere Komponente und/oder mindestens eine Dämpfungsflüssigkeit aufweist.

Bevorzugt liegt die Umgebungstemperatur bei der Verwendung unterhalb 0°C. Bevorzugt erfolgt die Verwendung bei tieferen Temperaturen, beispielsweise unterhalb von -20°C, -30°C oder sogar -40°C.

Die erfindungsgemäßen Lager können beispielsweise bei Kraftfahrzeugen, Gebäuden oder Maschinen eingesetzt werden. Besonders bevorzugt ist die Verwendung bei mobilen Anwendungen, wie Kraftfahrzeugen und Schwermaschinen, die von einem Anwender betrieben werden, der in einer Kabine des Gerätes tätig ist. Aus gesundheitlichen Gründen ist es von hoher Bedeutung, solche Arbeitnehmer vor Schwingungen, die durch den Motor des Gerätes oder des Arbeitsorgans verursacht sind, dauerhaft und gleichmäßig zu schützen.

Ein weiterer Gegenstand der Erfindung ist ein Flächenheizelement, das mit einem Lager lösbar verbindbar ist, wobei das Flächenheizelement Mittel zur lösbaren Verbindung mit dem Lager aufweist und als Abwicklung ausgestaltet ist. Es weist bevorzugt eine Länge und Breite von jeweils 1 cm bis 200 cm auf, die dem dämpfenden Lager bzw. der Montagesituation des Lagers angepasst ist. Das Flächenheizelement kann eine Bahnenware sein und/oder bereits eine Krümmung aufweisen, welche an die Oberfläche des Lagers angepasst ist. Es kann zusätzlich Ausnehmungen aufweisen, die zur Befestigung oder zur Fixierung an die Aufnahme eines Lagers dienen, die Durchlässigkeit gegenüber Fluiden bewirken oder die Durchleitung von Fluiden ermöglichen.

### Kurzbeschreibung der Zeichnung

- Figur 1:: zeigt schematisch und beispielhaft die erfindungsgemäße Verbindung eines Flächenheizelements mit einer Oberfläche eines Lagers sowie die zugehörigen elektronischen Bauteile.
- Figur 2:: zeigt schematisch und beispielhaft in einer Seitenansicht die erfindungsgemäße Verbindung eines Flächenheizelements mit einer Oberfläche eines Hydrolagers sowie die zugehörigen elektronischen Bauteile.

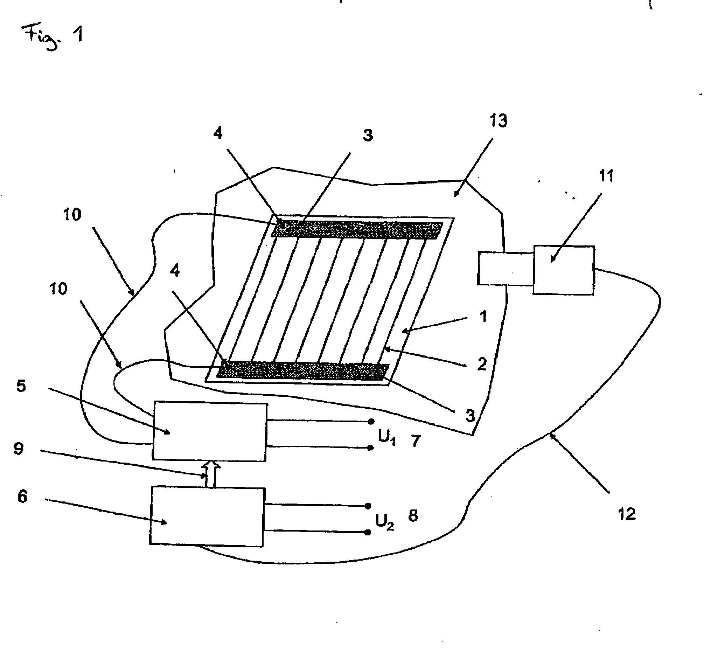

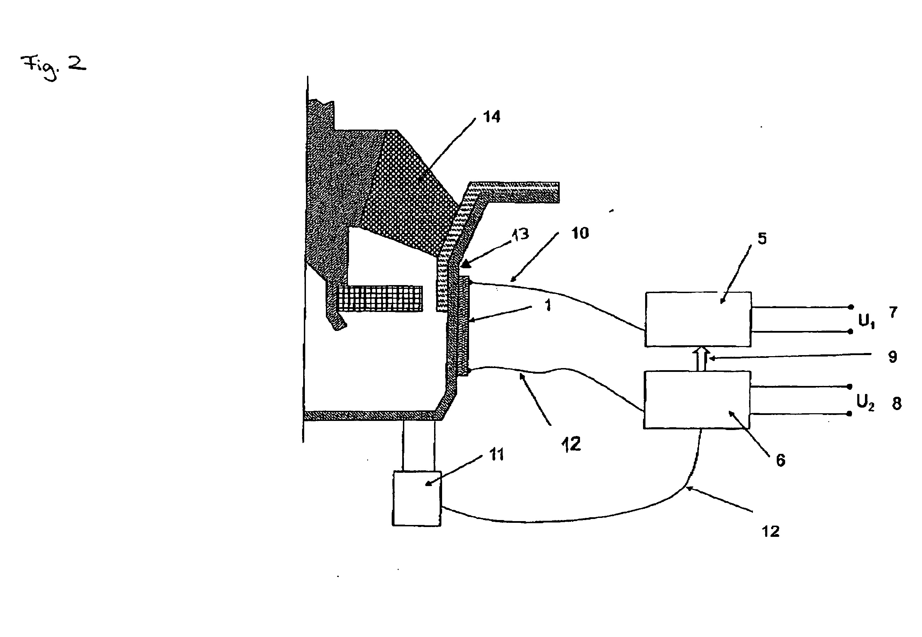

In der Figur 1 wird schematisch eine volumendefinierte Fläche (13) eines Lagers gezeigt, an die eine Bahnenware (1) mit elektrischen Leiterbahnen (2) flächig gebunden ist. Die parallelen Leiterbahnen (2) weisen elektrisch leitende Verbindungen (3) auf, welche die ersten elektrischen Leiterbahnen miteinander verbinden und eine Parallelschaltung ermöglichen. Die schematisch dargestellten Leiterbahnen (2, 3) mit der Bahnenware (1) bilden das Flächenheizelement. Das Flächenheizelement kann einen elektrischen Anschluss (4) aufweisen, über den es mit elektrischen Leitern (10) mit einer Spannungsquelle (5) verbunden ist. Diese kann beispielsweise einen Netzanschluss (7) aufweisen. Die Spannungsquelle (5) kann über eine Steuereinheit (6) gesteuert werden, die selbst einen Netanschluss (8) aufweisen kann. Dabei werden von der Steuereinheit (6) über eine Verbindung (9) Steuersignale an die Spannungsquelle übermittelt. Das Lager kann einen Temperatursensor (11) aufweisen, der über ein Sensorkabel (12) mit der Steuereinheit (6) verbunden ist. Auf diese Weise kann die Beheizung des Lagers durch das Heizelement ausgelöst werden, wenn eine definierte Temperatur unterschritten wird. In der Figur 2 wird eine Verbindung eines beispielhaften Hydrolagers (14) mit einem Flächenheizelement (1) in einer Seitenansicht gezeigt. Die elektrischen Bauteile und Verbindungen (5) bis (12) entsprechen dabei im wesentlichen den in Figur 1 gezeigten, wobei gemäß Figur 2 zwei Sensorkabel (12) enthalten sind, welche mit der Steuerungseinheit (6) verbunden sind. In Figur 2 ist ein elektrischer Leiter (10) gezeigt, es können jedoch zwei oder mehr Leiter (10) enthalten sein. Bei der flächigen Verbindung gemäß Figur 2 ist das Flächenheizelement auf einer zylindrisch gekrümmten Außenfläche des Hydrolagers angebracht (13),

Das erfindungsgemäße Lager in Verbindung mit einem Flächenheizelement und die beschriebenen Verwendungen lösen die der Erfindung zugrunde liegende Aufgabe. Die Erfindung ermöglicht eine effiziente Stabilisierung der Dämpfungseigenschaften eines Lagers bei niedrigen Temperaturen. Die Stabilisierung der Dämpfung und/oder Isolierung wird abhängig oder unabhängig von der Art und Ausbildung der elastomeren Komponente und der Dämpfungsflüssigkeit erreicht. Sofern schwingungstechnisch messbare Größen des Lagers mit dem Flächenheizelement oder der Lagerung erfasst werden, kann die Stabilisierung der Lagereigenschaften, primär Dämpfung und Isolierung mittelbar, in Abhängigkeit von der Art und Ausbildung der elastomeren Komponente und der Dämpfungsflüssigkeit, über eine Steuerung oder Regelung der Lagertemperatur erreicht werden. Die Erfindung ermöglicht insbesondere eine gleichmäßige Dämpfung und/oder Isolierung von Hydrolagern, die sowohl elastomere Komponenten als auch Dämpfungsflüssigkeiten enthalten und somit besonders anfällig für Temperaturschwankungen sind. Die erfindungsgemäße Stabilisierung schützt die Anwender von zu dämpfenden oder isolierenden Vorrichtungen, wie Maschinen, aber auch Personen und Objekte in deren Umgebung vor ungünstig großen Schwingungseinwirkungen. Die erfindungsgemäße Lösung ist auf einfache Weise ausführbar, flexibel und bei Bedarf einsetzbar, insbesondere bei lösbarer Verbindung des Flächenheizelements mit dem Lager. Der Einsatz teurer Spezialelastomere und Flüssigkeitsmischungen ist nicht erforderlich.

## Patentansprüche

1. Lager (14) zur Dämpfung und/oder Isolierung von Schwingungen, das mindestens eine elastomere Komponente und/oder mindestens eine Dämpfungsflüssigkeit aufweist, **dadurch gekennzeichnet, dass** das Lager (14) mindestens teilweise mit einem Flächenheizelement (1) verkleidet Ist, wobei das Flächenheizelement (1) eine Bahnenware umfasst, die mit einem leitfähigen Material ausgestattet ist, wobei das Flächenheizelement (1) mit dem Lager (14) lösbar verbunden ist.

2. Lager (14) nach Anspruch 1, wobei die Temperatur des Lagers (14) durch das Flächenheizelement (1) einstellbar ist

3. Lager (14) nach mindestens einem der vorhergehenden Ansprüche, wobei das Lager (14) mindestens eine gekrümmte Außenwand (13) aufweist, mit der das Flächenheizelement (1) verkleidet ist.

4. Lager (14) nach mindestens einem der vorhergehenden Ansprüche, wobei das Lager (14) ein Hydrolager oder ein Konuslager ist.

5. Lager (14) nach mindestens einem der vorhergehenden Ansprüche, wobei die elastomere Komponente ausgewählt ist aus einer Trennwand und einem Federkörper.

6. Lager (14) nach Anspruch 5, wobei die Bahnenware ein Vliesstoff oder ein textiles Material ist und/oder das leitfähige Material ein Metall oder Kohlenstoff ist.

7. Lager (14) nach mindestens einem der vorhergehenden Ansprüche, wobei das Flächenheizelement (1) mit einer äußeren Schicht versehen ist, insbesondere einer vor Verschleiß und/oder Feuchtigkeit schützenden Schicht.

8. Lager (14) nach mindestens einem der vorhergehenden Ansprüche, wobei das Flächenhetelemert (1) an mindestens ein elektrisches Bauteil angeschlossen ist, ausgewählt aus einer Spannungsquelle (5) und einem Temperatursensor (11).

9. Lager (14) nach mindestens einem der vorhergehenden Ansprüche, wobei die Temperatur des Flächenheizelements (1) mit einer Steuereinheit (6) und/oder einer Regelungseinheit eingestellt wird.

10. Verwendung eines Flächenheizelements (1) zur Erhöhung der Temperatur eines Lagers (14) zur Dämpfung und/oder Isolierung von Schwingungen, wobei das Lager (14) mindestens eine elastomere Komponente und/oder mindestens eine Dämpfungsflüssigkeit aufweist, wobei das Lager (14) mindestens teilweise mit dem Flächenheizelement (1) verkleidet ist, wobei das Flächenheizelement (1) eine Bahnenware umfasst, die mit einem leitfähigen Material ausgestattet ist, wobei das Flächenheizelement (1) mit dem Lager (14) lösbar verbunden ist

11. Verwendung gemäß Anspruch 10, wobei die Umgebungstemperatur unterhalb 0°C liegt.

12. Flächenheizelement, **dadurch gekennzeichnet, dass** es mit einem Lager (14) **dadurch gekennzeichnet, dass** es lösbar verbindbar ist, wobei das Flächenheizelement (1) eine Bahnenware umfasst, die mit einem leitfähigen Material ausgestattet ist, wobei das Flächenheizelement (1) Mittel zur lösbaren Verbindung mit dem Lager aufweist und als Abwicklung ausgestaltet ist.

13. Flächenheizelement (1) gemäß Anspruch 12, das zusätzlich Ausnehmungen aufweist, die zur Befestigung, zur Fixierung an die Aufnahme eines Lagers (14) oder zur Durchlässigkeü gegenüber Fluiden dienen.

## Claims

1. Bearing (14) for damping and/or isolating vibrations, which has at least one elastomeric component and/or at least one damping fluid, **characterized in that** the bearing (14) is at least partly encased with a sheet-like heating element (1), the sheet-like heating element (1) comprising a web which is provided with a conductive material, the sheet-like heating element (1) being detachably connected to the bearing (14).

2. Bearing (14) according to Claim 1, it being possible for the temperature of the bearing (14) to be set by the sheet-like heating element (1).

3. Bearing (14) according to at least one of the preceding claims, the bearing (14) having at least one curved outer wall (13), with which the sheet-like heating element (1) is encased.

4. Bearing (14) according to at least one of the preceding claims, the bearing (14) being a hydraulic bearing or a conical bearing.

5. Bearing (14) according to at least one of the preceding claims, the elastomeric component being chosen from a dividing wall and a spring body.

6. Bearing (14) according to Claim 5, the web being a nonwoven fabric or a textile material and/or the conductive material being a metal or carbon.

7. Bearing (14) according to at least one of the preceding claims, the sheet-like heating element (1) being provided with an outer layer, in particular a layer providing protection from wear and/or moisture.

8. Bearing (14) according to at least one of the preceding claims, the sheet-like heating element (1) being connected to at least one electrical component, chosen from a voltage source (5) and a temperature sensor (11).

9. Bearing (14) according to at least one of the preceding claims, the temperature of the sheet-like heating element (1) being set by an open-loop control unit (6) and/or a closed-loop control unit.

10. Use of a sheet-like heating element (1) to increase the temperature of a bearing (14) for damping and/or isolating vibrations, the bearing (14) having at least one elastomeric component and/or at least one damping fluid, the bearing (14) being at least partly encased with the sheet-like heating element (1), the sheet-like heating element (1) being detachably connected to the bearing (14).

11. Use according to Claim 10, the ambient temperature lying below 0°C.

12. Sheet-like heating element, **characterized in that** it can be detachably connected to a bearing (14), the sheet-like heating element (1) comprising a web which is provided with a conductive material, the sheet-like heating element (1) having means for the detachable connection to the bearing and being configured as a geometric development.

13. Sheet-like heating element (1) according to Claim 12, which additionally has clearances that serve for fastening, for fixing to the mount of a bearing (14) or for allowing fluids to pass through.

## Revendications

1. Palier (14) pour l'amortissement et/ou l'isolation de vibrations, lequel comprend au moins un composant élastomère et/ou au moins un liquide d'amortissement, **caractérisé en ce que** le palier (14) est revêtu au moins partiellement d'un élément de chauffage plat (1), l'élément de chauffage plat (1) comportant une bande qui est dotée d'un matériau conducteur, l'élément de chauffage plat (1) étant relié de manière amovible au palier (14).

2. Palier (14) selon la revendication 1, dans lequel la température du palier (14) peut être ajustée au moyen de l'élément de chauffage plat (1).

3. Palier (14) selon au moins l'une quelconque des revendications précédentes, dans lequel le palier (14) comprend au moins une paroi extérieure courbe (13) par laquelle est revêtu l'élément de chauffage plat (1).

4. Palier (14) selon au moins l'une quelconque des revendications précédentes, dans lequel le palier (14) est un palier hydraulique ou un palier conique.

5. Palier (14) selon au moins l'une quelconque des revendications précédentes, dans lequel le composant élastomère est sélectionné parmi une paroi de séparation et un corps élastique.

6. Palier (14) selon la revendication 5, dans lequel la bande est un non-tissé ou un matériau textile et/ou le matériau conducteur est un métal ou du carbone.

7. Palier (14) selon au moins l'une quelconque des revendications précédentes, dans lequel l'élément de chauffage plat (1) est pourvu d'une couche extérieure, en particulier d'une couche protégeant contre l'usure et/ou l'humidité.

8. Palier (14) selon au moins l'une quelconque des revendications précédentes, dans lequel l'élément de chauffage plat (1) est connecté à au moins un composant électrique, sélectionné parmi une source de tension (5) et un capteur de température (11).

9. Palier (14) selon au moins l'une quelconque des revendications précédentes, dans lequel la température de l'élément de chauffage plat (1) est ajustée à l'aide d'une unité de commande (6) et/ou d'une unité de régulation.

10. Utilisation d'un élément de chauffage plat (1) pour l'augmentation de la température d'un palier (14) pour l'amortissement et/ou l'isolation de vibrations, dans laquelle le palier (14) comprend au moins un composant élastomère et/ou au moins un liquide d'amortissement, dans laquelle le palier (14) est revêtu au moins partiellement par un élément de chauffage plat (1), dans laquelle l'élément de chauffage plat (1) comporte une bande qui est dotée d'un matériau conducteur, dans laquelle l'élément de chauffage plat (1) est relié de manière amovible au palier (14).

11. Utilisation selon la revendication 10, dans laquelle la température environnante se situe en dessous de 0°C.

12. Élément de chauffage plat, **caractérisé en ce qu'**il peut être relié de manière amovible à un palier (14), l'élément de chauffage plat (1) comportant une bande qui est dotée d'un matériau conducteur, l'élément de chauffage plat (1) comprenant des moyens pour une liaison libérable au palier et étant configuré sous forme de développement.

13. Élément de chauffage plat (1) selon la revendication 12, qui comprend en outre des évidements qui servent à réaliser l'attache, la fixation au logement d'un palier (14) ou à assurer la perméabilité par rapport à des fluides.
